# EUROPÄISCHE PATENTSCHRIFT

(11) **EP 0 577 018 B1**
(45) Veröffentlichungstag und Bekanntmachung des Hinweises auf die Patenterteilung: **05.03.1997**
(21) Anmeldenummer: 93110168.7
(22) Anmeldetag: 25.06.1993
(51) Int. Cl.: G01V 3/00

(54) **Band zum Auffinden von im Erdreich verlegten, nichtmetallischen Leitungen od. dgl.**
Band for recovering of non-metallic underground conducts or the like
Bande pour retrouver des conduites enterrées non-metalliques ou des choses pareilles

(30) Priorität: 03.07.1992 DE 9208920 U
(43) Veröffentlichungstag der Anmeldung: 05.01.1994
(73) Patentinhaber: KELMAPLAST, G. KELLERMANN GmbH, D-45549 Sprockhövel (DE)
(72) Erfinder: Kohlstadt, Markus, D-4322 Sprockhöve (DE)
(74) Vertreter: Mentzel, Norbert, Dipl.-Phys.

(56) Entgegenhaltungen:
- DE-C- 413 732
- FR-A- 2 083 413
- NL-A- 8 102 018

## Beschreibung

Die Erfindung betrifft ein Band zum Auffinden von im Erdreich verlegten, nichtmetallischen Leitungen od.dgl., das zusammen mit der nichtmetallischen Leitung im Erdreich oberhalb der Leitung verlegbar ist und aus einem Kunststoffband mit verhältnismäßig großer Reißfestigkeit besteht, an dem an der einen Seite, insbesondere durch Kleben, ein schmaleres Metallband, insbesondere Stahlband, für eine Ortung bei induktiver, wie auch bei galvanischer Ankopplung, befestigt ist, wobei zur Schaffung langer Bänder mehrere Bandabschnitte hintereinander anordbar und mit den Enden der Metallbänder leitend miteinander verbindbar sind.

Bei diesen Bändern, die beispielsweise aus der FR-A-2 083 413 bekannt sind, werden zum leitenden Miteinanderverbinden der Metallbänder vernietbare Metallstifte benutzt, die in die sich überlappenden Enden der Metallbänder einzubringen sind. Hierzu müssen jedoch zunächst Durchbrüche in die zu verbindenden Metallbandenden eingebracht werden, um danach die zu vernietenden Stifte einbringen zu können. Dieses ist umständlich und zeitraubend, und die leitende Verbindung zwischen den beiden miteinander zu verbindenden Metallbandenden ist mangelhaft, da die zu verbindenden Metallbandenden nur mit kleinen Flächen leitend aufeinanderliegen.

Der Erfindung liegt die Aufgabe zugrunde, die elektrisch leitende Verbindung zwischen zwei miteinander zu verbindende Bänder der eingangs erläuterten Art zu verbessern, wobei die elektrisch leitende Verbindung der Metallbandenden einfach und wohlfeil herstellbar ist.

Diese Aufgabe ist erfindungsgemäß dadurch gelöst, daß die leitend miteinander verbundenen Enden der Metallbänder von den zugehörigen Kunststoffbändern gelöst und sich überlappend zusammengelegt und mit einer auf den Überlappungsbereich aufgeschobenen Hülse aus Metall miteinander verpreßt sind. Dadurch wird in einfacher Weise erreicht, daß die miteinander zu verbindenden Metallbandenden gutleitend miteinander verbunden werden, da die miteinander zu verbindenden Metallbandenden im gesamten Überlappungsbereich flächig aufeinandergepreßt sind. Die elektrisch leitende Verbindung ist dabei in einfacher und wohlfeiler Weise herstellbar, da die Hülse aus Metall lediglich auf die miteinander zu verbindenden Enden der Metallbänder aufzuschieben und mit einer Zange miteinander zu verpressen ist.

Die sich überlappenden Enden der Metallbänder können im Überlappungsbereich zusammen mit der aufgeschobenen Hülse aus Metall wellenförmig miteinander verpreßt sein. Dadurch wird in einfacher Weise erreicht, daß im gesamten Überlappungsbereich der miteinander zu verbindenden Metallbandenden die miteinander zu verbindenden Metallbandenden zuverlässig gegeneinander gepreßt werden, um eine gute Leitfähigkeit zu erzielen. Um die wellenförmige Verpressung zu erzielen, sind die Preßbacken der Zange lediglich mit Wellen zu versehen, um im Verpressungsbereich die Wellenform zu erzielen. Sowohl die verpreßte Hülse als auch die dazwischenliegenden Metallbandenden erhalten dabei die Wellenform. Durch die Wellenform wird dabei zugleich auch ein Herausziehen der Metallbandenden aus der verpreßten Hülse erschwert.

Die aufgeschobene und verpreßte Hülse aus Metall kann die gesamte Länge des Überlappungsbereiches der miteinander zu verbindenden Metallbandenden erfassen. Dadurch wird in einfacher Weise erreicht, daß die freien Enden der miteinander zu verbindenden Metallbandenden nicht aus der Hülse aus Metall herausragen. Die freien Enden der Metallbänder sind scharfkantig und könnten zu Verletzungen führen.

Für Abzweigleitungen kann ein Ortungsband oberhalb der Abzweigleitung im Erdreich verlegbar sein. Dadurch können nicht nur geradlinig verlaufende Hauptleitungen sondern auch von der Hauptleitung abzweigende Abzweigleitungen ein Ortungsband zugeordnet bekommen, so daß auch diese Abzweigleitungen aufgefunden werden.

Das Band für die Abzweigleitungen kann oberhalb der Abzweigleitungen im Erdreich anordbar und mit dem Ortungsband der Hauptleitung leitend verbindbar sein, wobei das vom zugehörigen Kunststoffband gelöste Metallbandende des Abzweigbandes mit einem vollständig zurückgeknickten Abschnitt auf das Metallband des der Hauptleitung zugeordneten Ortungsbandes aufgeschoben ist, und die beiden Schenkel des Knickes mit einer aufgeschobenen Hülse aus Metall wellenförmig miteinander verpreßt sind. Dadurch kann in einfacher Weise auch das einer Abzweigleitung zugeordnete Ortungsband leitend mit dem Ortungsband einer Hauptleitung verbunden werden, so daß sowohl das Band der Hauptleitung als auch das Band der Abzweigleitung geortet werden können. Das der Abzweigleitung zugeordnete Band ist dabei einfach und zuverlässig an dem Band der Hauptleitung leitend verbindbar.

Die beiden Schenkel des Knickes können auch mit dem dazwischenliegenden Bereich des Metallbandes des der Hauptleitung zugeordneten Ortungsbandes wellenförmig miteinander verpreßt sein. Dadurch ist in einfacher Weise zuverlässig das Metallband des der Abzweigleitung zugeordneten Bandes leitend mit dem Metallband des der Hauptleitung zugeordneten Bandes verbunden.

In der Zeichnung ist die elektrisch leitende Verbindung in zwei Ausführungsbeispielen dargestellt, und zwar zeigen:
- Fig. 1: zwei miteinander verbundene Bandenden in Draufsicht,
- Fig. 2: einen Schnitt nach der Linie II - II der Fig. 1,
- Fig. 3: einen Schnitt nach der Linie III - III der Fig. 1,
- Fig. 4: einen einer Hauptleitung zuzuordnendes Band einem einer Abzweigleitung zuzuordnenden Abzweigband, in Draufsicht,
- Fig. 5: einen Schnitt nach der Linie V - V der Fig. 4, und
- Fig. 6: einen Schnitt nach der Linie VI - VI der Fig. 4.

Das in der Zeichnung dargestellte Band 10 dient zum Auffinden von nicht näher dargestellten nichtmetallischen Leitungen od.dgl., die im Erdreich verlegt sind. Das Band 10 ist dabei zusammen mit der nichtmetallischen Leitung im Erdreich oberhalb der Leitung verlegbar.

Das Band 10 besteht aus einem Kunststoffband 11 mit verhältnismäßig großer Reißfestigkeit, an dem an der einen Seite, insbesondere durch Kleben, ein schmaleres Metallband 12, insbesondere Stahlband, für eine Ortung bei induktiver, wie auch bei galvanischer Ankopplung, befestigt ist. Zur Schaffung langer Bänder 10 sind mehrere Bandabschnitte hintereinander anordbar, wobei die Enden der Metallbänder 12 leitend miteinander verbindbar sind.

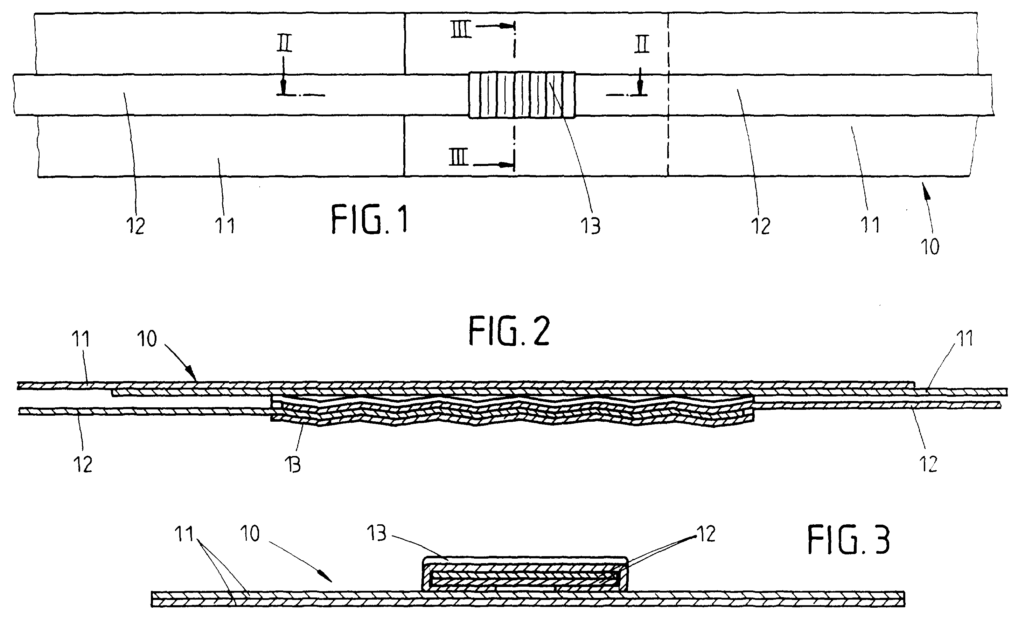

Zum leitenden Verbinden der Enden der Metallbänder 12 zweier Bänder 10 sind zunächst die Enden der Metallbänder 12 von den zugehörigen Kunststoffbändern 11 zu lösen. Danach werden die Enden der beiden Metallbänder 12 sich überlappend zusammengelegt und mit einer auf dem Überlappungsbereich aufgeschobenen Hülse 13 aus Metall miteinander verpreßt. Wie insbesondere aus der Fig. 2 ersichtlich, werden die sich überlappenden Enden der Metallbänder 12 im Überlappungsbereich zusammen mit der aufgeschobenen Hülse 13 aus Metall wellenförmig miteinander verpreßt. Durch dieses wellenförmige Verpressen der Hülse zusammen mit den sich überlappenden Bandenden des Metallbandes 12 wird eine besonders gutleitende Verbindung der Metallbänder 12 erzielt, da die sich überlappenden Enden der Metallbänder im gesamten von der Hülse 13 erfaßten Bereich ganzflächig aufeinanderliegen und zusammengepreßt werden. Das Verpressen der Hülse 13 zusammen mit den in der Hülse vorgesehenen Überlappungsbereich der miteinander zu verbindenden Enden der Metallbänder 12 erfolgt dabei mit einer nicht näher dargestellten Zange, deren Backen Wellenform aufweisen.

Die aufgeschobene und verpreßte Hülse 13 aus Metall erfaßt dabei, wie insbesondere aus der Fig. 2 ersichtlich, die gesamte Länge des Überlappungsbereiches der miteinander zu verbindenden Enden des Metallbandes 12. Dadurch wird ein Herausragen der Enden des Metallbandes 12 aus der Hülse 13 vermieden. Die Enden der Metallbänder 12 besitzen scharfe Kanten und könnten zu Verletzungen führen.

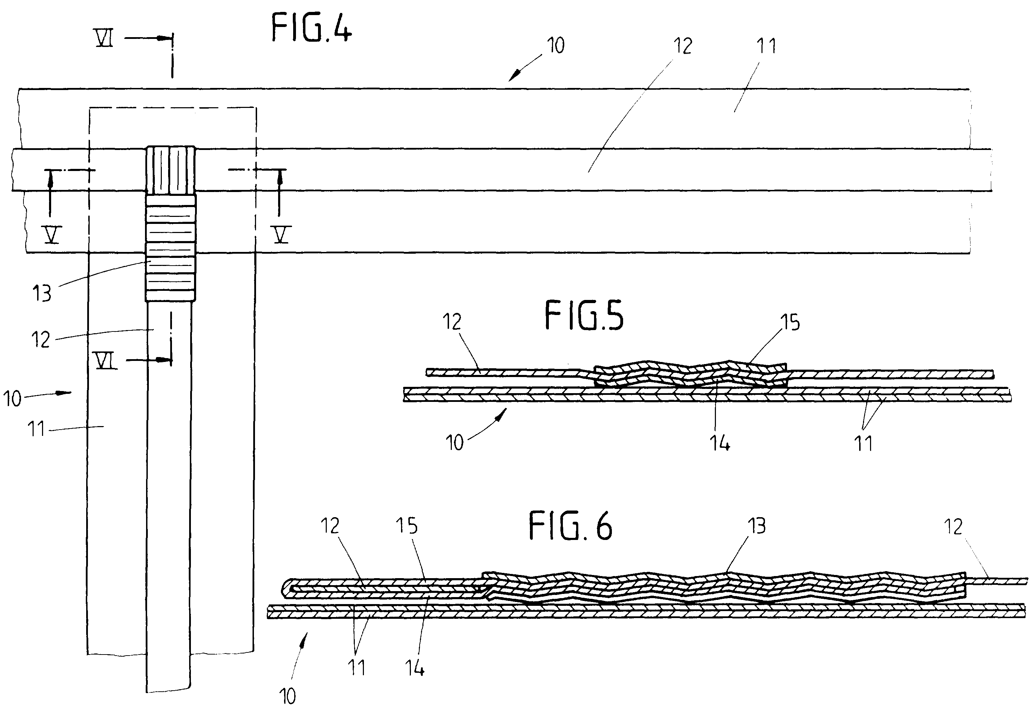

Wie insbesondere aus der Fig. 4 ersichtlich, kann für nicht näher dargestellte Abzweigleitungen auch ein Ortungsband 10 oberhalb der Abzweigleitung im Erdreich verlegt werden. Das Metallband 12 des der Abzweigleitung zugeordneten Ortungsbandes 10 ist dabei leitend mit dem Metallband des Ortungsbandes 10 verbunden, welches der Hauptleitung zugeordnet ist. Wie aus den Fig. 4 bis 6 ersichtlich, ist das vom zugehörigen Kunststoffband 11 gelöste Metallbandende 12 des der Abzweigleitung zugeordneten Bandes 10 mit einem vollständig zurückgeknickten Abschnitt 14 auf das Metallband 12 des der Hauptleitung zugeordneten Ortungsbandes 10 aufgeschoben. Die beiden Schenkel des Knickes sind mit einer aufgeschobenen Hülse 13 aus Metall wellenförmig miteinander verpreßt. Dadurch wird eine besonders zuverlässige Befestigung des Metallbandes 12 des der Abzweigleitung zugeordneten Bandes 10 an dem Metallband 12 des der Hauptleitung zugeordneten Bandes 10 erzielt. Um eine besonders gutleitende Verbindung der Metallbänder 12 der beiden Bänder 10 zu erzielen, sind die beiden Schenkel 14, 15 des Knickes auch mit dem dazwischenliegenden Bereich des Metallbandes 12 des der Hauptleitung zugeordneten Ortungsbandes 10 wellenförmig miteinander verpreßt.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Abänderungen möglich.

## Patentansprüche

1. Band zum Auffinden von im Erdreich verlegten, nichtmetallischen Leitungen od.dgl., das zusammen mit der nichtmetallischen Leitung im Erdreich oberhalb der Leitung verlegbar ist und aus einem Kunststoffband mit verhältnismäßig großer Reißfestigkeit besteht, an dem an der einen Seite, insbesondere durch Kleben ein schmaleres Metallband, insbesondere Stahlband für eine Ortung bei induktiver, wie auch bei galvanischer Ankopplung, befestigt ist, wobei zur Schaffung langer Bänder mehrere Bandabschnitte hintereinander anordbar und mit den Enden der Metallbänder leitend miteinander verbindbar sind,
**dadurch gekennzeichnet,**
daß die leitend miteinander verbundenen Enden der Metallbänder (12) von den zugehörigen Kunststoffbändern (11) gelöst und sich überlappend zusammengelegt und mit einer auf den Überlappungsbereich aufgeschobenen Hülse (13) aus Metall miteinander verpreßt sind.

2. Band nach Anspruch 1, dadurch gekennzeichnet, daß die sich überlappenden Enden der Metallbänder (12) im Überlappungsbereich zusammen mit der aufgeschobenen Hülse (13) aus Metall wellenförmig miteinander verpreßt sind.

3. Band nach Anspruch 1 oder 2, dadurch gekennzeichnet, daß die aufgeschobene und verpreßte Hülse (13) aus Metall die gesamte Länge des Überlappungsbereiches der miteinander zu verbindenden Metallbandenden (12) erfaßt.

4. Band für Abzweigleitungen, das oberhalb von Abzweigleitungen im Erdreich anordbar und mit dem Ortungsband der Hauptleitung leitend verbindbar ist, nach einem der Ansprüche 1 bis 3, dadurch gekennzeichnet, daß das vom zugehörigen Kunststoffband (11) gelöste Metallbandende (12) des Abzweigbandes mit einem vollständig zurückgeknickten Abschnitt (14) auf das Metallband (12) des der Hauptleitung zugeordneten Ortungsbandes (10) aufgeschoben ist, und die beiden Schenkel (14,15) des Knickes mit einer aufgeschobenen Hülse (13) aus Metall wellenförmig miteinander verpreßt sind.

5. Band nach Anspruch 4, dadurch gekennzeichnet, daß die beiden Schenkel (14,15) des Knickes auch mit dem dazwischenliegenden Bereich des Metallbandes (12) des der Hauptleitung zugeordneten Ortungsbandes (10) wellenförmig miteinander verpreßt sind.

## Claims

1. A band for recovering non-metallic underground conduits or the like which, together with the non-metallic underground conduit, can be laid underground on top of said conduit and which consists of a plastic band with a relatively high tear strength to which, on the one side, a narrower metal strip, especially steel strip, is attached, in particular by adhesive, for recoery purposes using inductive and conductive coupling, whereby several band sections can be arranged consecutively to create long bands and can be connected to each other conductively with the ends of the metal strips,
**characterised in that**,
the conductively connected ends of the metal strips (12) are detached from the pertinent plastic bands (11), placed to overlap each other and pressed together with a metal sleeve (13) pushed onto the area of overlap.

2. A band according to claim 1, characterised in that the overlapping ends of the metal strips (12) are pressed in the area of overlap together with the metal sleeve (13) which is pushed on.

3. A band according to claim 1 or 2, characterised in that the metal sleeve (13), which has been pushed on and pressed together, covers the entire length of the area of overlap of the metal strip ends (12) to be joined together.

4. A band for branch conduits which can be arranged on top of the underground branch conduits and can be connected conductively to the recovery band of the main conduit according to one of the claims 1 to 3, characterised in that the metal strip end (12) of the branch band detached from the pertinent plastic band (11) is pushed onto the metal strip (12) of the recovery band (10) allocated to the main conduit with a section (14) which is completely bent back, and the two legs (14, 15) of the bend are pressed together to form a wave shape with a metal sleeve (13) which is pushed on.

5. A band according to claim 4, characterised in that the two legs (14, 15) of the bend are also pressed together to form a wave shape with the in-between area of the metal band (12) of the recovery band (10) allocated to the main conduit.

## Revendications

1. Ruban servant à détecter des conduites non métalliques ou assimilées enterrées dans le sol, posable avec la conduite non métallique dans le sol au-dessus de celle-ci et qui se compose d'un ruban en plastique d'une résistance au déchirement relativement élevée contre un côté duquel est fixé, en particulier par collage, un ruban métallique plus étroit, en particulier un ruban en acier permettant sa détection par couplage inductif comme également galvanique, plusieurs segments de ruban étant disposables les uns à la suite des autres pour obtenir des rubans de grande longueur et les extrémités des rubans métallique étant connectables entre elles pour assurer la continuité électrique,
**caractérisé en ce que**
les extrémités des rubans métalliques (12) reliées entre elles pour assurer l'électroconduction sont détachées des rubans en plastique (11) auxquels elles sont affectées, en ce qu'elles sont rassemblées se chevauchant et en ce qu'elles sont comprimées les unes contre les autres par une douille (13) enfilées sur la zone de chevauchement.

2. Ruban selon revendication 1, caractérisé en ce que les extrémités en chevauchement des rubans métalliques (12) sont comprimées ondulées toutes ensemble avec la douille métallique (13) enfilée.

3. Ruban selon revendication 1 ou 2, caractérisé en ce que la douille en métal (13) enfilée et comprimée couvre toute la longueur de la zone de chevauchement des extrémités de ruban métallique (12) à relier entre elles.

4. Ruban selon l'une des revendications 1 à 3 pour conduites de dérivation, disposable enterré au-dessus de conduites de dérivation et reliable de manière électroconductrice au ruban de détection accompagnant la conduite principale, caractérisé en ce que l'extrémité de ruban métallique (12) défaite du ruban de dérivation en plastique (11) auquel elle est affectée présente un segment (14) complètement replié sur le ruban métallique du ruban de détection affecté (10) à la conduite principale, et en ce que les deux branches (14, 15) du pli sont comprimées l'une contre l'autre de manière ondulée au moyen d'une douille métallique (13) enfilée.

5. Ruban selon revendication 4, caractérisé en ce que les deux branches (14, 15) du pli sont également comprimées ondulées avec la partie située entre les plis du ruban métallique (12) affecté au ruban de détection (10) de la conduite principale.
